# EUROPÄISCHE PATENTSCHRIFT

(11) **EP 3 899 290 B1**
(45) Veröffentlichungstag und Bekanntmachung des Hinweises auf die Patenterteilung: **30.08.2023**
(21) Anmeldenummer: 19816616.7
(22) Anmeldetag: 03.12.2019
(51) Int. Cl.: F16B 15/06, F16B 19/14

(54) **BEFESTIGUNGSELEMENT**
ATTACHMENT ELEMENT
ÉLÉMENT DE FIXATION

(30) Priorität: 20.12.2018 EP 18214539
(43) Veröffentlichungstag der Anmeldung: 27.10.2021
(73) Patentinhaber: Hilti Aktiengesellschaft, 9494 Schaan (LI)
(72) Erfinder: SCHULTE SUEDHOFF, Eric, 6800 Feldkirch (AT); HAAG, Stefan, 9470 Buchs (CH); BEAUVAIS, Simon, Shanghai 201108 (CN); GUELTEKIN, Furkan, 9470 Buchs SG (CH)
(74) Vertreter: Hilti Aktiengesellschaft Corporate Intellectual Property
(86) Internationale Anmeldenummer: PCT/EP2019/083476
(87) Internationale Veröffentlichungsnummer: WO 2020/126474

(56) Entgegenhaltungen:
- DE-A1-102012 215 901
- DE-B3-102004 040 701
- US-A- 2 558 379

## Beschreibung

Die vorliegende Erfindung betrifft ein Befestigungselement, wie beispielsweise Bolzen, Nagel oder Stift.

Derartige Befestigungselemente, wie z.B. Nägel, Bolzen und dgl. aus Stahl, werden in der Befestigungstechnik zum Befestigen von Gegenständen an harten Aufnahmewerkstoffen, wie Beton, Metall oder Gestein, eingesetzt. Die Befestigungselemente weisen dazu einen Schaft insbesondere mit einer sich in Setzrichtung verjüngenden Spitze und einem am anderen Ende des Schaftes liegenden Kopf auf, welcher gegenüber dem Durchmesser des Schaftes vergrössert ist. Der Eintreibvorgang erfolgt mit hoher Geschwindigkeit schlagend oder eintreibend beispielsweise mittels brennkraftbetriebener Setzgeräte.

Es sind Befestigungselemente bekannt, bei denen der Schaft an seinem Umfang ein Profil mit mehreren Profilrücken und dazwischenliegenden Furchen aufweist. Weiterhin sind Gestaltungen bekannt, bei denen die Profilrücken zur Befestigungsrichtung geneigt sind.

Aus der DE 10 2004 040 701 B3 ist ein Befestigungselement mit einem Schaft und einer Spitze bekannt. Der Schaft weist einen ersten balligen Abschnitt und einen zweiten Abschnitt, der sich an den ersten balligen Abschnitt anschliesst, auf. Ferner ist an dem Schaft eine Gewindeprofilierung angeordnet.

Eine Aufgabe der vorliegenden Erfindung liegt darin, ein Befestigungselement mit hoher Befestigungskraft zur Verfügung zu stellen.

Ein erfindungsgemäßes Befestigungselement weist die Merkmale von Anspruch 1 auf.

Gemäss einem ersten Aspekt weist der Profilrücken eine in die Befestigungsrichtung weisende Vorderflanke und eine gegen die Befestigungsrichtung weisende Hinterflanke auf, wobei die Vorderflanke einen grösseren Flächeninhalt aufweist als die Hinterflanke. Dadurch wird diejenige Fläche des Profilrückens, welche während eines Eintreibvorgangs durch Reibung aufgeheizt wird und dadurch verstärkt zu einer Haltekraft des Befestigungselements in dem Untergrund beiträgt, auf Kosten von Flächen mit geringerem Beitrag zur Haltekraft vergrössert, so dass insgesamt die Befestigungskraft des Befestigungselements erhöht ist.

Gemäss der Erfindung umfasst das Befestigungselement einen sich an das Vorderende des Schaftes anschliessenden Spitzenbereich mit einer Nagelspitze, wobei der Spitzenbereich eine in der Eintreibrichtung gemessene Spitzenlänge und eine senkrecht zur Eintreibrichtung orientierte Querschnittsfläche mit einem Flächeninhalt aufweist, welcher an einem Übergang von dem Spitzenbereich zum Schaft so gross ist wie der Flächeninhalt der Querschnittsfläche des Schaftes und sich von dem Schaft zur Nagelspitze verringert, und wobei der Spitzenbereich einen balligen Abschnitt umfasst. Bevorzugt besteht der Spitzenbereich aus dem balligen Abschnitt. Aufgrund der balligen Form des Spitzenbereichs steigt der Flächeninhalt der Querschnittsfläche des Spitzenbereichs ausgehend von der Nagelspitze schnell an, so dass zu Beginn eines Eintreibvorgangs viel Reibungswärme erzeugt wird. Dadurch kann eine Oberfläche des Profilrückens verstärkt zu einer Haltekraft des Befestigungselements in dem Untergrund beitragen, so dass die Befestigungskraft des Befestigungselements erhöht ist.

Eine vorteilhafte Ausführungsform ist dadurch gekennzeichnet, dass der Spitzenbereich eine Spitzenbereichsmitte aufweist, welche von dem Übergang von dem Spitzenbereich zum Schaft und von der Nagelspitze in der Eintreibrichtung gemessen gleich weit entfernt ist, und wobei der Flächeninhalt der Querschnittsfläche des Spitzenbereichs an der Spitzenbereichsmitte mehr als 25% des Flächeninhalts der Querschnittsfläche des Schaftes beträgt. Bevorzugt beträgt der Flächeninhalt der Querschnittsfläche des Spitzenbereichs an der Spitzenbereichsmitte mehr als 50%, besonders bevorzugt mehr als 70% oder mehr als 75% des Flächeninhalts der Querschnittsfläche des Schaftes.

Eine vorteilhafte Ausführungsform ist dadurch gekennzeichnet, dass der Schaft einen im Bereich des Profilrückens gemessenen Schaftdurchmesser aufweist, und wobei die Spitzenlänge das 1,1- bis 1,6-fache des Schaftdurchmessers beträgt.

Gemäß der Erfindung beträgt ein Neigungswinkel des Profilrückens gegenüber der Eintreibrichtung weniger als 20°.

Dadurch ist sichergestellt, dass ein Schlag auf das Befestigungselement in der Eintreibrichtung eine Drehung des Befestigungselements verursacht. Unter Umständen eignet sich der Profilrücken nicht als Gewinde, welches eine Drehung des Befestigungselements in einen Vortrieb umwandeln würde.

Eine vorteilhafte Ausführungsform ist dadurch gekennzeichnet, dass eine Querschnittsfläche des Schaftes einen Flächeninhalt aufweist, welcher sich entlang der Eintreibrichtung nicht wesentlich ändert.

Eine vorteilhafte Ausführungsform ist dadurch gekennzeichnet, dass das Befestigungselement einen sich an das Hinterende des Schaftes anschliessenden Kopf umfasst.

Eine vorteilhafte Ausführungsform ist dadurch gekennzeichnet, dass der Schaft zwei oder mindestens drei, bevorzugt mindestens vier Profilrücken aufweist. Besonders bevorzugt sind die Profilrücken gleichmässig am Umfang des Schaftes verteilt.

Gemäß der Erfindung weist der Spitzenbereich eine Querschnittsfläche auf, deren Flächeninhalt sich von dem Schaft zur Nagelspitze stetig verringert. Bevorzugt setzt sich der Profilrücken vom Schaft aus in den Spitzenbereich hinein fort. Besonders bevorzugt setzt sich der Profilrücken im Wesentlichen bis zur Nagelspitze fort.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.

Es zeigen:
- Fig. 1: ein erfindungsgemässes Befestigungselement in Seitenansicht,
- Fig. 2: das Befestigungselement in Schrägansicht,
- Fig. 3: eine Walzbacke zur Herstellung des Befestigungselements,
- Fig. 4: verschiedene Ausführungsbeispiele einer Querschnittsfläche eines Befestigungselements und
- Fig. 5: einen Verlauf eines Flächeninhalts einer Querschnittsfläche eines Befestigungselements.

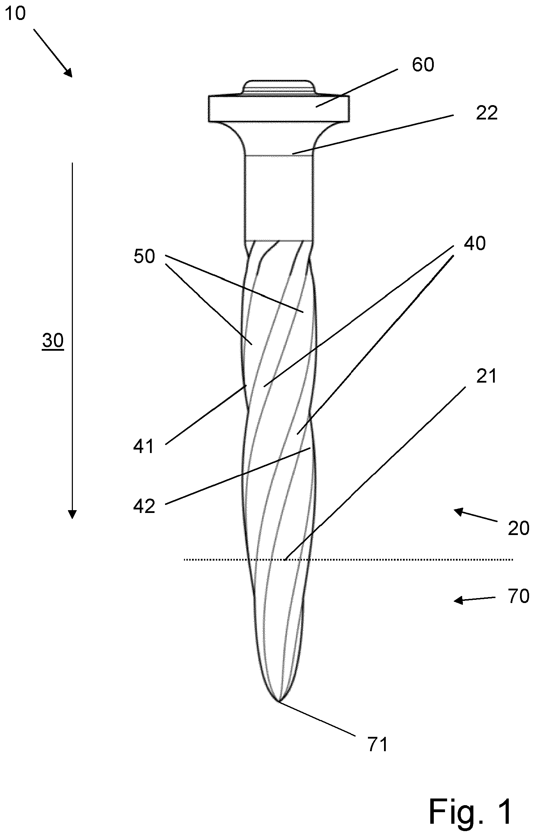

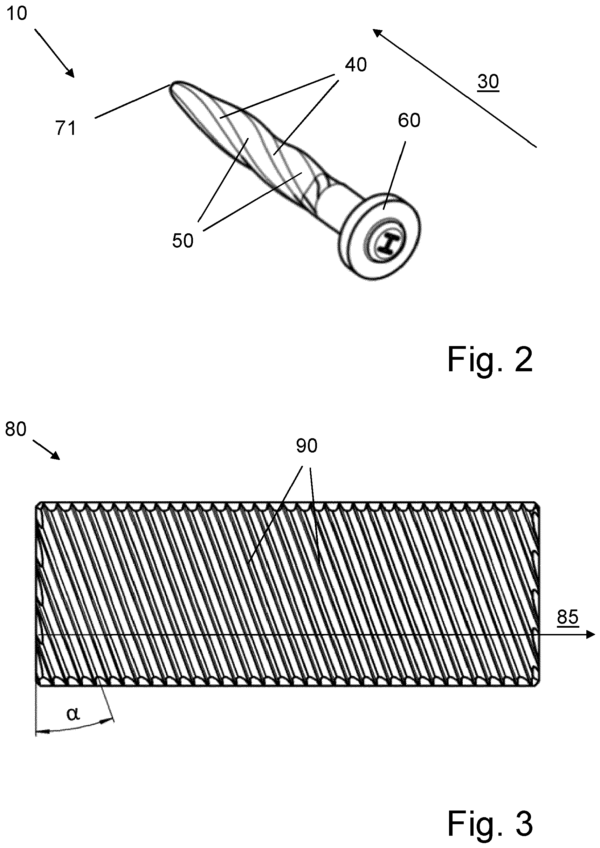

Die Fig. 1 und 2 zeigen ein Befestigungselement 10 in einer Seitenansicht. Das Befestigungselement 10 umfasst einen Schaft 20, welcher eine Eintreibrichtung 30 definiert und ein in die Eintreibrichtung 30 weisendes Vorderende 21 sowie ein gegen die Eintreibrichtung 30 weisendes Hinterende 22 aufweist. Der Schaft 20 weist eine senkrecht zur Eintreibrichtung 30 orientierte Querschnittsfläche und an seinem Umfang mehrere zur Eintreibrichtung in einem spitzen Winkel von 15° geneigte Profilrücken 40 auf. Jeweils zwischen zwei Profilrücken 40 bilden sich Profilzwischenbereiche 50 aus, welche im vorliegenden Beispiel als Furchen ausgebildet sind. An das Hinterende 22 des Schaftes 20 schliesst sich ein Kopf 60 an. An das Vorderende 21 des Schaftes 20 schliesst sich ein balliger Spitzenbereich 70 mit einer bevorzugt punktförmigen Nagelspitze 71 an. Die Profilrücken 40 weisen jeweils eine in die Befestigungsrichtung 30 weisende Vorderflanke 41 und eine gegen die Befestigungsrichtung 30 weisende Hinterflanke 42 auf und setzen sich vom Schaft 20 aus in den Spitzenbereich 70 hinein bis zur Nagelspitze 71 fort.

Fig. 3 zeigt eine Walzbacke 80, welche zur Herstellung des Befestigungselements verwendbar ist, indem ein nicht dargestellter Rohling mit einem Schaft zwischen der Walzbacke 80 und einer gleichgeformten Gegenbacke in einer Rollrichtung 85 gerollt wird. Die Walzbacke 80 weist eine Vielzahl von Nuten 90 auf, so dass während des Rollens ein Profil mit Profilrücken in einen Umfang des Schaftes gewalzt wird. Die Nuten 90 sind gegenüber einer Längsrichtung des Schaftes, welche senkrecht zur Rollrichtung 85 orientiert ist, um einen spitzen Neigungswinkel α geneigt, so dass auch die gewalzten Profilrücken gegenüber der Längsrichtung des Schaftes um den Winkel α geneigt sind.

Zur Herstellung eines sich an das Vorderende des Schaftes anschliessenden Spitzenbereichs mit einer Nagelspitze weisen die Walzbacke 80 und die Gegenbacke Bereiche auf, welche sich während des Rollens einander gegenüberliegen. Ein dabei zwischen den genannten Bereichen auftretender Spalt verjüngt sich in einer von den Nuten 90 weg weisenden Richtung, so dass ein Material des Spitzenbereichs zwischen der Walzbacke 80 und der Gegenbacke eingequetscht wird. Dadurch wird der Spitzenbereich einerseits geformt und andererseits erhitzt, so dass sich überschüssiges Material einfach thermisch von dem Spitzenhereirh abtrennen lässt Wenn sich bei einigen Ausführungsbeispielen die Profilrücken des Befestigungselements bis zur Nagelspitze erstrecken sollen, kommt bevorzugt ein thermisches Auseinanderziehen zweier Nagelrohlinge gemäss EP 1 057 553 B1 zur Anwendung. Bei einem nicht gezeigten Ausführungsbeispiel erstrecken sich die Nuten der Walzbacke und/oder der Gegenbacke bis in den oben genannten, sich verjüngenden Spalt hinein.

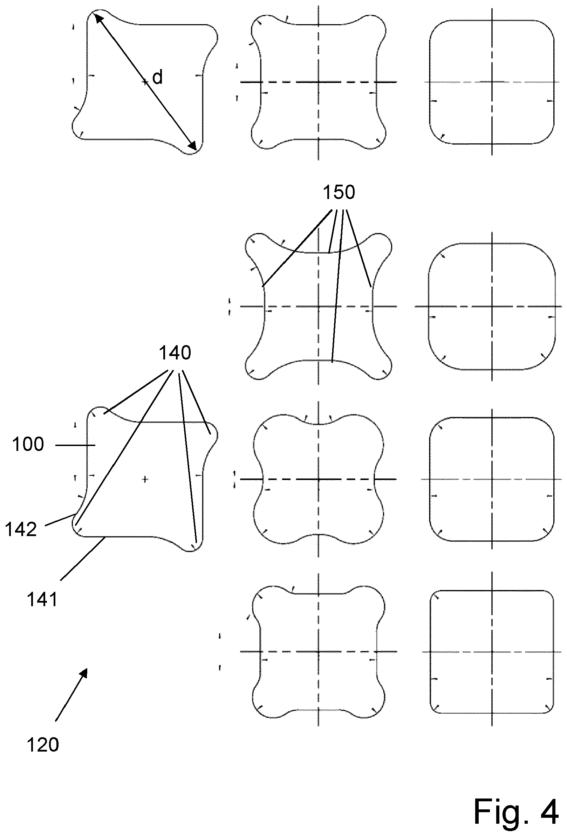

Fig. 4 zeigt jeweils eine senkrecht zur Eintreibrichtung orientierte Querschnittsfläche 100 eines Schaftes 120 eines Befestigungselements gemäss mehrerer verschiedener Ausführungsbeispiele. Der jeweilige Schaft 120 weist jeweils vier gleichmässig am Umfang des jeweiligen Schaftes 120 verteilte Profilrücken 140 und dazwischenliegende Profilzwischenbereiche 150 auf, welche bei den in Fig. 4 links und mittig dargestellten Ausführungsbeispielen als Furchen ausgebildet sind. Bei den in Fig. 4 rechts dargestellten Ausführungsbeispielen sind die Profilzwischenbereiche 150 eben ausgebildet, bei nicht dargestellten Ausführungsbeispielen sind die Profilzwischenbereiche konkav ausgebildet. Die Profilrücken zeichnen sich dadurch aus, dass sie gegenüber einer kreisförmigen Querschnittsform und gegenüber den Profilzwischenbereichen radial vorspringen. Der jeweilige Schaft 120 weist einen im Bereich der Profilrücken gemessenen Schaftdurchmesser d auf.

Aufgrund der Neigung der Profilrücken 140 gegenüber der Eintreibrichtung weist jeder Profilrücken 140 eine in die Befestigungsrichtung weisende Vorderflanke 141 und eine gegen die Befestigungsrichtung weisende Hinterflanke 142 auf, wobei die Vorderflanke 141 während eines Eintreibvorgangs durch Reibung stärker aufgeheizt wird als die Hinterflanke 142. Die Vorderflanke 141 weist dabei einen grösseren Flächeninhalt auf als die Hinterflanke 142, so dass insgesamt eine Befestigungskraft des Befestigungselements erhöht ist.

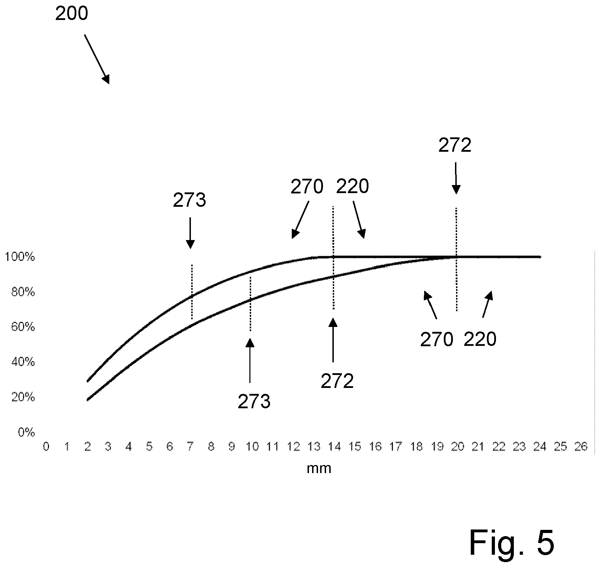

Fig. 5 zeigt in einem Diagramm 200 einen Verlauf eines Flächeninhalts einer Querschnittsfläche eines Befestigungselements in zwei Ausführungsbeispielen, aufgetragen als Prozentsatz eines Flächeninhalts im Bereich eines Schaftes 220 des Befestigungselements gegen einen Abstand zu einer Nagelspitze in Millimetern. Im Bereich des Schaftes des Befestigungselements ändert sich der Flächeninhalt entlang der Eintreibrichtung nicht wesentlich (100%). In einem Spitzenbereich 270 verringert sich der Flächeninhalt stetig, ausgehend von 100% an einem Übergang 272 von dem Spitzenbereich 270 zum Schaft 220, bis zu einer Nagelspitze (0 mm, 0%). Der Spitzenbereich 270 weist eine Spitzenbereichsmitte 273 auf, welche von dem Übergang 272 und von der Nagelspitze gleich weit entfernt ist. In der Spitzenbereichsmitte 273 beträgt der Flächeninhalt der Querschnittsfläche des Spitzenbereichs 270 im ersten Ausführungsbeispiel (untere Kurve) 72%, im zweiten Ausführungsbeispiel (obere Kurve) 78% des Flächeninhalts der Querschnittsfläche des Schaftes 220. Weiterhin beträgt eine Sitzenläne des Spitzenbereichs von dem Übergang 272 bis zur Naelsitze im ersten Ausführungsbeispiel (untere Kurve) das 1,5-fache, im zweiten Ausführungsbeispiel (obere Kurve) das 1,2-fache des Schaftdurchmessers.

Vorstehend wurde die Erfindung anhand mehrerer Ausführungsbeispiele eines Befestigungselements erläutert. Die beschriebenen Merkmale sind dabei von jedem Ausführungsbeispiel auf alle anderen Ausführungsbeispiele einzeln oder in Kombination übertragbar, soweit sie sich nicht mit dem Wortlaut der Ansprüche widersprechen. Es wird darauf hingewiesen, dass das erfindungsgemässe Befestigungselement auch für andere Zwecke einsetzbar ist.

## Patentansprüche

1. Befestigungselement, umfassend einen Schaft (20), welcher eine Eintreibrichtung definiert, wobei der Schaft (20) ein in die Eintreibrichtung weisendes Vorderende (21), ein gegen die Eintreibrichtung weisendes Hinterende (22) und an seinem Umfang einen Profilrücken (40) aufweist, wobei der Profilrücken (40) zur Eintreibrichtung in einem spitzen Winkel geneigt ist, weiterhin umfassend einen sich an das Vorderende (21) des Schaftes (20) anschliessenden Spitzenbereich (70) mit einer Nagelspitze (71), wobei der Schaft (20) eine senkrecht zur Eintreibrichtung orientierte Querschnittsfläche mit einem Flächeninhalt aufweist, wobei der Spitzenbereich (70) eine in der Eintreibrichtung gemessene Spitzenlänge und eine senkrecht zur Eintreibrichtung orientierte Querschnittsfläche mit einem Flächeninhalt aufweist, welcher an einem Übergang von dem Spitzenbereich (70) zum Schaft (20) so gross ist wie der Flächeninhalt der Querschnittsfläche des Schaftes (20) und sich von dem Schaft (20) zur Nagelspitze (71) verringert, und wobei der Spitzenbereich (70) einen balligen Abschnitt umfasst, **dadurch gekennzeichnet, dass** ein Neigungswinkel des Profilrückens (40) gegenüber der Eintreibrichtung weniger als 20° beträgt.

2. Befestigungselement nach Anspruch 1, wobei der Spitzenbereich (70) eine Spitzenbereichsmitte aufweist, welche von dem Übergang von dem Spitzenbereich (70) zum Schaft (20) und von der Nagelspitze (71) in der Eintreibrichtung gemessen gleich weit entfernt ist, und wobei der Flächeninhalt der Querschnittsfläche des Spitzenbereichs (70) an der Spitzenbereichsmitte mehr als 25% des Flächeninhalts der Querschnittsfläche des Schaftes (20) beträgt.

3. Befestigungselement nach Anspruch 2, wobei der Flächeninhalt der Querschnittsfläche des Spitzenbereichs (70) an der Spitzenbereichsmitte mehr als 50% des Flächeninhalts der Querschnittsfläche des Schaftes (20) beträgt.

4. Befestigungselement nach Anspruch 3, wobei der Flächeninhalt der Querschnittsfläche des Spitzenbereichs (70) an der Spitzenbereichsmitte mehr als 70%, insbesondere mehr als 75%, des Flächeninhalts der Querschnittsfläche des Schaftes (20) beträgt.

5. Befestigungselement nach einem der vorhergehenden Ansprüche, wobei der Schaft (20) einen im Bereich des Profilrückens (40) gemessenen Schaftdurchmesser aufweist, und wobei die Spitzenlänge das 1,1- bis 1,6-fache des Schaftdurchmessers beträgt.

6. Befestigungselement nach einem der vorhergehenden Ansprüche, wobei sich der Flächeninhalt der Querschnittsfläche des Schaftes (20) in der Eintreibrichtung nicht wesentlich ändert.

7. Befestigungselement nach einem der vorhergehenden Ansprüche, wobei sich der Flächeninhalt der Querschnittsfläche des Spitzenbereichs (70) von dem Schaft (20) zur Nagelspitze (71) stetig verringert.

8. Befestigungselement nach einem der vorhergehenden Ansprüche, wobei sich der Profilrücken (40) vom Schaft (20) aus in den Spitzenbereich (70) hinein fortsetzt.

9. Befestigungselement nach Anspruch 8, wobei sich der Profilrücken (40) im Wesentlichen bis zur Nagelspitze (71) fortsetzt.

10. Befestigungselement nach einem der vorhergehenden Ansprüche, wobei der Profilrücken (40) eine in die Befestigungsrichtung weisende Vorderflanke (41) und eine gegen die Befestigungsrichtung weisende Hinterflanke (42) aufweist, und wobei die Vorderflanke (41) einen grösseren Flächeninhalt aufweist als die Hinterflanke (42).

11. Befestigungselement nach einem der vorhergehenden Ansprüche, wobei der Schaft (20) zwei oder mindestens drei, insbesondere mindestens vier Profilrücken (40) aufweist.

12. Befestigungselement nach Anspruch 11, wobei die Profilrücken (40) gleichmässig am Umfang des Schaftes (20) verteilt sind.

13. Befestigungselement nach einem der vorhergehenden Ansprüche, wobei der Spitzenbereich (70) aus dem balligen Abschnitt besteht.

## Claims

1. Fastening element, comprising a shank (20), which defines a driving-in direction, the shank (20) having a front end (21), facing in the driving-in direction, a rear end (22), facing counter to the driving-in direction, and at its periphery a profile ridge (40), the profile ridge (40) being inclined in relation to the driving-in direction at an acute angle, also comprising a tip region (70) adjoining the front end (21) of the shank (20) and having a nail tip (71), the shank (20) having a cross-sectional area, oriented perpendicularly to the driving-in direction, with an area content, the tip region (70) having a tip length, measured in the driving-in direction, and a cross-sectional area, oriented perpendicularly to the driving-in direction, with an area content that is as great at a transition from the tip region (70) to the shank (20) as the area content of the cross-sectional area of the shank (20) and decreases from the shank (20) to the nail tip (71), and the tip region (70) comprising a convex portion, **characterized in that** an angle of inclination of the profile ridge (40) with respect to the driving-in direction is less than 20°.

2. Fastening element according to Claim 1, the tip region (70) having a tip region midpoint, which is the same distance, measured in the driving-in direction, away from the transition from the tip region (70) to the shank (20) and from the nail tip (71), and the area content of the cross-sectional area of the tip region (70) at the tip region midpoint being more than 25% of the area content of the cross-sectional area of the shank (20).

3. Fastening element according to Claim 2, the area content of the cross-sectional area of the tip region (70) at the tip region midpoint being more than 50% of the area content of the cross-sectional area of the shank (20).

4. Fastening element according to Claim 3, the area content of the cross-sectional area of the tip region (70) at the tip region midpoint being more than 70%, in particular more than 75%, of the area content of the cross-sectional area of the shank (20).

5. Fastening element according to one of the preceding claims, the shank (20) having a shank diameter, measured in the region of the profile ridge (40), and the tip length being 1.1 to 1.6 times the shank diameter.

6. Fastening element according to one of the preceding claims, the area content of the cross-sectional area of the shank (20) not changing significantly in the driving-in direction.

7. Fastening element according to one of the preceding claims, the area content of the cross-sectional area of the tip region (70) decreasing steadily from the shank (20) to the nail tip (71).

8. Fastening element according to one of the preceding claims, the profile ridge (40) continuing from the shank (20) into the tip region (70).

9. Fastening element according to Claim 8, the profile ridge (40) continuing substantially up to the nail tip (71).

10. Fastening element according to one of the preceding claims, the profile ridge (40) having a front flank (41), facing in the fastening direction, and a rear flank (42), facing counter to the fastening direction, and the front flank (41) having a greater area content than the rear flank (42).

11. Fastening element according to one of the preceding claims, the shank (20) having two or at least three, in particular at least four, profile ridges (40).

12. Fastening element according to Claim 11, the profile ridges (40) being distributed uniformly at the periphery of the shank (20).

13. Fastening element according to one of the preceding claims, the tip region (70) consisting of the convex portion.

## Revendications

1. Élément de fixation, comprenant une tige (20), laquelle définit un sens d'enfoncement, la tige (20) présentant une extrémité avant (21) orientée dans le sens d'enfoncement, une extrémité arrière (22) orientée dans le sens opposé au sens d'enfoncement et un dos profilé (40) au niveau de sa périphérie, le dos profilé (40) étant orienté suivant un angle aigu par rapport au sens d'enfoncement, comprenant en outre une région de pointe (70) se raccordant à l'extrémité avant (21) de la tige (20) et dotée d'une pointe de clou (71), la tige (20) présentant une surface de section transversale orientée perpendiculairement au sens d'enfoncement et dotée d'une superficie, la région de pointe (70) présentant une longueur de pointe mesurée dans le sens d'enfoncement et une surface de section transversale orientée perpendiculairement au sens d'enfoncement et dotée d'une superficie, laquelle est égale à la superficie de la surface de section transversale de la tige (20) au niveau d'une transition de la région de pointe (70) à la tige (20) et diminuant de la tige (20) à la pointe de clou (71), et la région de pointe (70) comprenant une partie bombée, **caractérisé en ce qu'**un angle d'inclinaison du dos profilé (40) par rapport au sens d'enfoncement est inférieur à 20°.

2. Élément de fixation selon la revendication 1, la région de pointe (70) présentant un centre de région de pointe, lequel est situé à la même distance, mesurée dans le sens d'enfoncement, de la transition de la région de pointe (70) à la tige (20) et de la pointe de clou (71), et la superficie de la surface de section transversale de la région de pointe (70) au centre de la région de pointe valant plus de 25% de la superficie de la surface de section transversale de la tige (20).

3. Élément de fixation selon la revendication 2, la superficie de la surface de section transversale de la région de pointe (70) au centre de la région de pointe valant plus de 50% de la superficie de la surface de section transversale de la tige (20).

4. Élément de fixation selon la revendication 3, la superficie de la surface de section transversale de la région de pointe (70) au centre de la région de pointe valant plus de 70%, en particulier plus de 75 %, de la superficie de la surface de section transversale de la tige (20).

5. Élément de fixation selon l'une des revendications précédentes, la tige (20) présentant un diamètre de tige mesuré dans la région du dos profilé (40), et la longueur de pointe valant de 1,1 à 1,6 fois le diamètre de tige.

6. Élément de fixation selon l'une des revendications précédentes, la superficie de la surface de section transversale de la tige (20) ne variant pas sensiblement dans le sens d'enfoncement.

7. Élément de fixation selon l'une des revendications précédentes, la superficie de la surface de section transversale de la région de pointe (70) diminuant de manière continue de la tige (20) à la pointe de clou (71).

8. Élément de fixation selon l'une des revendications précédentes, le dos profilé (40) se prolongeant à partir de la tige (20) dans la région de pointe (70).

9. Élément de fixation selon la revendication 8, le dos profilé (40) se prolongeant sensiblement jusqu'à la pointe de clou (71).

10. Élément de fixation selon l'une des revendications précédentes, le dos profilé (40) présentant un flanc avant (41) orienté dans le sens de fixation et un flanc arrière (42) orienté en sens opposé au sens de fixation, et le flanc avant (41) présentant une plus grande superficie que le flanc arrière (42).

11. Élément de fixation selon l'une des revendications précédentes, la tige (20) présentant deux ou au moins trois, en particulier au moins quatre dos profilés (40).

12. Élément de fixation selon la revendication 11, les dos profilés (40) étant répartis uniformément sur la périphérie de la tige (20).

13. Élément de fixation selon l'une des revendications précédentes, la région de pointe (70) étant constituée de la partie bombée.
